# EUROPÄISCHE PATENTSCHRIFT

(11) **EP 4 234 875 B1**
(45) Veröffentlichungstag und Bekanntmachung des Hinweises auf die Patenterteilung: **27.11.2024**
(21) Anmeldenummer: 23172738.9
(22) Anmeldetag: 26.05.2020
(51) Int. Cl.: E06B 9/11, E06B 9/15, E06B 9/165, E06B 3/48, B29C 53/04, E06B 3/70

(54) **ROLLTOR**
ROLLER DOOR
PORTE ROULANTE

(30) Priorität: 19.09.2019 DE 102019125204
(43) Veröffentlichungstag der Anmeldung: 30.08.2023
(62) Teilanmeldung aus: 20729666.6
(73) Patentinhaber: Seuster KG, 58513 Lüdenscheid (DE)
(72) Erfinder: Fischer, Jörg, 44269 Dortmund (DE)
(74) Vertreter: Hermann, Felix

(56) Entgegenhaltungen:
- WO-A1-2008/138032
- DE-A1- 3 210 560
- DE-C- 800 786
- US-A1- 2005 072 089

## Beschreibung

Die Erfindung betrifft ein Rolltor nach dem Oberbegriff des Patentanspruchs 1.

Derartige Rolltore werden unter anderem als sogenannte Schnelllauftore zum Verschließen von Industriehallen eingesetzt. Dabei kommt es zum einen darauf an, dass die Torblattbewegung sicher geführt ist. Zum anderen ist es von Bedeutung, dass oft nur wenig Raum zur Unterbringung des Torblatts in der Öffnungsstellung zur Verfügung steht. Dazu können beispielsweise in der WO 2018/219512 A1 beschriebene Rolltore der eingangs angegebenen Art zur Führung der Torblattbewegung im Bereich der in der Schließstellung zumindest abschnittweise in Schwererichtung verlaufenden Ränder des Torblatts angeordnete und an dem Torblatt befestigte Gelenkanordnungen aufweisen, von denen jede eine Mehrzahl von bezüglich senkrecht zu den seitlichen Rändern und etwa parallel zur Torblattebene verlaufenden Gelenkachsen gelenkig miteinander verbundene Gelenkglieder aufweisen. Dabei wird gemäß der genannten Schrift der Platzbedarf des Tors in der Öffnungsstellung dadurch reduziert, dass zumindest einige der Segmente des Torblatts aus einem biegsamen Material gebildet werden, das sich selbst in der Öffnungsstellung dem zu bildenden Wickel anpasst und so einen geringeren Spiraldurchmesser in der Öffnungsstellung ermöglicht. Durch die Führung des Torblatts mit Hilfe der an die Stabilisierungseinrichtung gekoppelten Gelenkglieder der Gelenkanordnung können bei der Torblattbewegung auftretende Zug- bzw. Schubkräfte über die Gelenkanordnung übertragen werden, so dass auch bei hohen Torlaufgeschwindigkeiten eine zuverlässige Führung der Torblattbewegung möglich ist, wenn darauf geachtet wird, dass die Stabilisierungseinrichtungen des Torblatts sicher an die Gelenkglieder der Gelenkanordnungen gekoppelt sind. Beim Betrieb der aus der WO 2018/219512 bekannten Tore mit hohen Torlaufgeschwindigkeiten hat es sich jedoch gezeigt, dass es im Bereich der Übergänge zwischen der Stabilisierungseinrichtung und den Torblattsegmenten zu Beschädigungen des Torblatts kommt.

Die DE 3210560 A1 offenbart einen Rollladen mit den Merkmalen des Oberbegriffs des Patentanspruchs 1.

Angesichts dieser Probleme im Stand der Technik liegt der Erfindung die Aufgabe zugrunde, Rolltore bereitzustellen, mit denen eine hohe Torlaufgeschwindigkeit unter Reduzierung des Risikos einer Beschädigung des Torblatts mit verbessertem Wärmeschut möglich ist.

Erfindungsgemäß wird diese Aufgabe durch die im kennzeichnenden Teil des Patentanspruchs 1 angegebene Weiterbildung der bekannten Rolltore gelöst.

Die Erfindung geht auf die Erkenntnis zurück, dass es auch bei der vorstehend beschriebenen Kinematik, bei der Schub- und Zugkräfte über das durch die Gelenkanordnungen und die Stabilisierungseinrichtungen gebildete Gerüst übertragen werden, noch zu beachtlichen Kräften im Bereich des Übergangs zwischen den Stabilisierungseinrichtungen und den Randbereichen der Torblattsegmente kommt. Diese Kräfte treten im Besonderen beim Übergang in die Öffnungsstellung und der dort bewirkten Umlenkung der Torblattbewegung zum Erhalt eines mehrlagigen Wickels auf, wobei besonders hohe Kräfte beobachtet werden, wenn die Torblattsegmente zumindest teilweise aus einem biegsamen Material gebildet sind, wie in der WO 2018/219512 vorgeschlagen. Bei den in dieser Schrift vorgeschlagenen Toren werden die Torblattsegmente in die Stabilisierungseinrichtungen, ggf. unter Verwendung einer Glasleiste, eingeklemmt. Dabei kann es aber dazu kommen, dass die Torblattsegmente trotz der Klemmfunktion bezüglich der Stabilisierungseinrichtung verrutschen und anschließend nicht wieder in den ursprünglichen Zustand zurückkehren, weil das durch die Klemmfunktion der Glasleiste verhindert wird. Dadurch können optisch sichtbare Wellen bzw. Verwerfungen des Torblatts im Bereich des Übergangs zwischen Stabilisierungseinrichtung und Torblattsegment entstehen.

Es wurde versucht, diesen Mangel dadurch zu beseitigen, dass die ggf. aus biegsamem Material hergestellten Torblattsegmente derart über eine Klemmleiste bezüglich den Stabilisierungseinrichtungen fixiert werden, dass ein Herausziehen unter dynamischer Last ebenso wenig möglich ist, wie unter statischer Krafteinwirkung. Es hat sich allerdings gezeigt, dass sich die Klemmpunkte der Fixierleiste derart auf die Torblattsegmente übertragen, dass es ebenfalls zu einer optischen Beeinträchtigung kommt. Auch in diesem Fall kommt es zu Verwerfungen bzw. ähnlichen Beschädigungen im Bereich des Übergangs zwischen Stabilisierungseinrichtung und Torblattsegment.

Im Rahmen der Erfindung wurde erkannt, dass diese Mängel durch eine schwimmende Lagerung der Torblattsegmente bezüglich der Stabilisierungseinrichtung verhindert werden können, ohne dadurch die Gesamtstabilität der Anordnung zu beeinträchtigen. Im Rahmen dieser Erfindung wird davon Gebrauch gemacht, dass Stabilisierungseinrichtungen und ggf. vorhandene Gelenkanordnungen ein stabiles Gerüst bilden, über das die bei der Torblattbewegung entstehenden Kräfte übertragen werden können, ohne dass es zur Stabilisierung der Gesamtanordnung einer starren Befestigung der Torblattsegmente an den Stabilisierungseinrichtungen bedarf. Daher wird eine schwimmende Lagerung, die eine Relativbewegung der Randbereiche der Torblattelemente bezüglich der Stabilisierungseinrichtung ermöglicht, realisierbar, ohne dass es dadurch zu einer Beeinträchtigung der Torblattbewegung bzw. der Stabilität der gesamten Torkonstruktion kommt. Andererseits ermöglicht die schwimmende Lagerung die Aufnahme von im Verlauf der Torblattbewegung ggf. entstehenden Spiels bzw. von Relativbewegungen zwischen Stabilisierungseinrichtung und Torblattsegment, ohne dass es zu einer Beschädigung oder optischen Beeinträchtigung der Torblattkonstruktion durch übermäßige Krafteinwirkung kommt.

Die schwimmende Lagerung kann nicht nur eine Relativbewegung zwischen dem Randbereich des Torblattsegments und der Stabilisierungseinrichtung in der Torblattbewegungsrichtung, sondern ggf. auch in einer parallel zu dem schwimmend gelagerten Randbereich bzw. senkrecht zur Torblattbewegungsrichtung verlaufenden Richtung ermöglichen, so dass auch bei entsprechenden geringfügigen Abweichungen der Torblattbewegung von der vorgegebenen Bahn kaum Beschädigungen der Torblattsegmente auftreten.

Zur Vermeidung einer Ablösung der Torblattsegmente von den Stabilisierungseinrichtungen hat es sich als zweckmäßig erwiesen, wenn die Relativbewegung des schwimmend gelagerten Randbereichs mindestens eines Torblattsegments bezüglich der Stabilisierungseinrichtung mit Hilfe einer Begrenzungsanordnung begrenzt wird, wobei die Begrenzungsanordnung insbesondere bei einer Relativbewegung in einer parallel zur Torblattbewegungsrichtung verlaufenden Richtung wirksam wird.

Bei einer besonders bevorzugten Ausführungsform der Erfindung weist die Begrenzungsanordnung eine Erweiterung des schwimmend gehaltenen Randbereichs in einer senkrecht zu der durch die Torblattbewegungsrichtung und die Stabilisierungseinrichtung aufgespannten Torblattebene verlaufenden Dickenrichtung und eine in der Stabilisierungseinrichtung gebildeten Aufnahme für die Erweiterung des daran schwimmend gehaltenen Randbereichs auf, wobei die Aufnahme eine von einem Übergangsbereich des Segments zwischen der Erweiterung und einem außerhalb der Stabilisierungseinrichtung freiliegenden Bereich des Segments durchsetzte Mündung aufweist, deren Breite in Dickenrichtung größer ist als die Dicke des Übergangsbereichs in Dickenrichtung, aber geringer als die Abmessungen der Erweiterung in Dickenrichtung.

Bei dieser Ausführungsform der Erfindung ist die Stabilisierungseinrichtung entsprechend der WO 2018/219512 A1 zweckmäßigerweise durch ein Stabilisierungsprofil mit einem Aufnahmebereich zum Aufnehmen der Erweiterung des Randbereichs des Torblattsegments ausgeführt, wobei die Aufnahme des Stabilisierungsprofils so auf die Abmessungen des Torblattsegments abgestimmt ist, dass das Torblattsegment mit Spiel und ohne Klemmwirkung an dem Stabilisierungsprofil gehalten ist. Durch Abstimmung der Abmessungen der Erweiterung auf die Mündung der Aufnahme kann erreicht werden, dass der Randbereich des Torblattsegments nicht in einer parallel zur Torblattbewegungsrichtung verlaufenden Richtung aus der Aufnahme herausgezogen werden kann.

Eine weitere Begrenzung der Relativbewegung des Randbereichs des Torblattsegments bezüglich der Stabilisierungseinrichtung bzw. des Stabilisierungsprofils kann erreicht werden, wenn die Aufnahme auf ihrer der Mündung gegenüberliegenden Seite von einem Boden begrenzt ist, wobei der Abstand zwischen der Mündung der Aufnahme und dem Boden in Torblattbewegungsrichtung größer ist als die Länge der Erweiterung des schwimmend gehaltenen Randbereichs in Torblattbewegungsrichtung. Durch die Differenz der Abmessungen wird das mögliche Spiel der schwimmenden Halterung des Randbereichs bezüglich des Stabilisierungsprofils bestimmt.

Bei einer besonders bevorzugten Ausführungsform der Erfindung ist das Torblattsegment durch ein bahnförmiges Material gebildet, wobei die Erweiterung des Torblattsegments durch Biegen des schwimmend gehaltenen Randbereichs bezüglich einer parallel zur Stabilisierungseinrichtung verlaufenden Biegeachse gebildet sein kann. Bei dieser Ausführungsform der Erfindung wird kein zusätzliches Bauelement zur Bildung der Erweiterung des Torblattsegments benötigt. Die Biegung des Torblattsegments im senkrecht zur Bewegungsrichtung verlaufenden Randbereich kann beispielsweise durch einen Rollformprozess erfolgen. Dabei kann der Randbereich des Torblattsegments beispielsweise nach Art eines Hakens auf sich selbst zurückgebogen werden, um so eine Erweiterung des schwimmend gehaltenen Randbereichs in der Dickenrichtung zu erhalten.

Bei einer anderen Ausführungsform der Erfindung kann die Erweiterung durch eine Verdickung des Randbereichs, insbesondere durch Ankleben und/oder Anschweißen eines Keders gebildet sein. Sowohl die durch Umbiegen des schwimmend gehaltenen Randbereichs gebildete Erweiterung des Torblattsegments als auch die durch Ankleben und/oder Anschweißen eines Keders gebildete Erweiterung kann sich über die gesamte Breite des Torblatts erstrecken. Es ist aber auch an solche Ausführungsformen gedacht, bei denen sich die Erweiterung nur über einen Teil der gesamten Breite des Torblatts erstreckt. Insbesondere bei der zuletzt beschriebenen Ausführungsform der Erfindung kann die Erweiterung auch durch auf einen Rand des Torblattsegments aufgebrachte einzelne Erweiterungselemente gebildet sein, die beispielsweise nach Art von Klammerelementen ausgeführt sind. Bei solchen Erweiterungsklammern kann es sich um U-förmige Bauteile handeln, die beispielsweise aus Blech gebildet sein können. Im Bereich der Anlage dieser Erweiterungsklammern an dem Torblattsegment können hakenförmige Vorsprünge zur Schaffung einer formschlüssigen Verbindung zwischen den Erweiterungsklammern und dem beispielsweise aus Kunststoff, wie etwa Polycarbonat, gebildeten Rand des Torblattsegments vorgesehen sein. Die hakenförmigen Vorsprünge können auch als Widerhaken ausgeführt sein. Beim Aufstecken der Erweiterungsklammern auf den Torblattrand verkrallen sich die Erweiterungsklammern an den Torblattsegmenten und verhindern das Herausziehen des Torblattsegments aus der Aufnahme der Stabilisierungseinrichtung. Die Erweiterungsklammern können sich über die gesamte Breite des Torblattsegments erstrecken. Es ist aber auch an solche Ausführungsformen gedacht, bei denen zwei, drei oder mehr Erweiterungsklammern mit Abstand voneinander an einem Rand des Torblattsegments festgelegt sind.

Im Hinblick auf die Montage eines erfindungsgemäßen Rolltors hat es sich als besonders günstig erwiesen, wenn die Stabilisierungseinrichtung mindestens zwei lösbar miteinander verbundene Aufnahmeteile aufweist, welche einander gegenüberliegende Begrenzungen der Mündung bilden. Bei dieser Ausführungsform der Erfindung kann der die Erweiterung aufweisende Randbereich des Torblattsegments zunächst an ein die Mündung begrenzende Begrenzungsfläche eines ersten Aufnahmeteils in einer senkrecht zur Hauptfläche des Torblattsegments bzw. Torblattebene verlaufenden Richtung angelegt und danach das zweite, eine weitere Begrenzungsfläche der Mündung bildende Aufnahmeteil angefügt werden, wobei eine formschlüssige Verbindung zwischen den beiden Aufnahmeteilen möglich ist. Beispielsweise kann das andere Aufnahmeteil an das erste Aufnahmeteil angeklipst werden.

Wenn die Stabilisierungseinrichtung zwei in Torblattbewegungsrichtung voneinander beabstandete Aufnahmen zur Aufnahme der einander zugewandten Randbereiche benachbarter Torblattsegmente aufweist, hat es sich als besonders zweckmäßig erwiesen, wenn die in der Schließstellung obere Aufnahme und die entsprechende Mündung von zwei lösbar miteinander verbundenen Aufnahmeteilen begrenzt ist. In diesem Fall kann ein oberer Rand eines Torblattsegments in einer parallel zu der Stabilisierungseinrichtung verlaufenden Richtung in die untere Aufnahme der Stabilisierungseinrichtung eingeschoben werden. Dann kann das Torblattsegment in eine Führungseinrichtung des Rolltors eingefädelt und im Anschluss der untere Rand des Torblattsegments mit einer darunter angeordneten Stabilisierungseinrichtung verbunden werden, indem der untere Rand des Torblattsegments zunächst an eine die Mündung begrenzende Begrenzungsfläche des ersten Aufnahmeteils der Stabilisierungseinrichtung angelegt und danach das zweite Aufnahmeteil in einer senkrecht zur Torblattebene verlaufenden Richtung zur Bildung der Aufnahme für den unteren Randbereich des Torblattsegments an dem ersten Aufnahmeteil befestigt wird.

Im Hinblick auf eine möglicherweise angestrebte Dichtungsfunktion kann es zweckmäßig sein, wenn in mindestens einer Aufnahme, vorzugsweise einer oberen Aufnahme der Stabilisierungseinrichtung, vorzugsweise im Bereich des Bodens dieser Aufnahme, ein Dichtungsmaterial aufgenommen ist. Zusätzlich oder alternativ kann das Dichtungsmaterial auch zwischen der Erweiterung im Randbereich eines Torblattsegments und der Mündung der Aufnahme vorgesehen sein. Bei dieser Anordnung kann eine Dämpfung beim Verlauf der Torblattbewegung erreicht werden, falls die Erweiterung an einen Rand der Mündung anschlägt. So kann auch eine leichte Spannung zwischen Stabilisierungseinrichtung und Torblattsegment erreicht werden, welche leichte Toleranzen auszugleichen vermag. Ein zwischen Erweiterung und Mündung angeordnetes Dichtungsmaterial kann die Scheibe straff in Position halten und eine mögliche Geräuschentwicklung bei Bewegung des Torblattsegments bezüglich der Stabilisierungseinrichtung reduzieren oder ganz verhindern. Ein entsprechendes Dichtungsmaterial kann in die Aufnahme der Stabilisierungseinrichtung eingebracht werden oder direkt auf der Erweiterung des Torblattsegments angebracht sein. Dabei kann es sich um ein bei Eindringen von Feuchtigkeit quellendes Dichtungsmaterial handeln. Da im Bereich der in der Schließstellung unteren Aufnahmen kaum Feuchtigkeit in die Aufnahmen eindringen kann, wird in diesen Aufnahmen regelmäßig kein Dichtungsmaterial benötigt. Wie den vorstehenden Erläuterungen zu entnehmen ist, kommt die vorliegende Erfindung mit besonderem Vorteil bei solchen Toren zum Einsatz, bei denen mindestens ein einen schwimmend gelagerten Randabschnitt aufweisendes Segment mindestens eine Scheibe aufweist, die zumindest abschnittweise aus einem biegsamen und/oder transparenten Material, wie etwa Polycarbonat, gebildet ist.

Im Sinne der Verbesserung des Wärmeschutzes ist erfindungsgemäß vorgesehen, dass mindestens ein einen schwimmend gelagerten Randbereich aufweisendes Torblattsegment mindestens zwei in Torblattdickenrichtung voneinander beabstandete und etwa parallel zueinander verlaufende Scheiben aufweist, von denen jede mindestens einen an der Stabilisierungseinrichtung gehaltenen und einem benachbarten Torblattsegment zugewandten Randbereich aufweist, wobei mindestens ein Randbereich mindestens einer Scheibe derart schwimmend an der Stabilisierungseinrichtung gehalten ist, dass eine Relativbewegung dieses Randbereichs bezüglich der Stabilisierungseinrichtung zumindest in Torblattbewegungsrichtung möglich ist. Dieser Randbereich kann ähnlich an der Stabilisierungseinrichtung gehalten sein wie vorstehend bereits beschrieben. In diesem Zusammenhang hat es ich als besonders günstig erwiesen, wenn mindestens eine Stabilisierungseinrichtung zwei in Torblattdickenrichtung voneinander beabstandete Aufnahmen zur Aufnahme jeweils eines Randbereichs einer Scheibe eines Torblattsegments aufweist.

Die Scheiben eines Torblattsegments sind bei der gerade beschriebenen Ausführungsform der Erfindung in der Öffnungsstellung radial voneinander beabstandet. Sie werden längs radial voneinander beabstandeten Bahnen in die Öffnungsstellung verfahren und verformen sich entsprechend unterschiedlich. Dadurch kann bei Bewegen des Torblatts in die Öffnungsstellung ggf. eine kurzzeitige Kollision entstehen, wenn die Randbereiche der Scheiben identisch ausgeführt sind und in identischen Aufnahmen der Stabilisierungseinrichtung aufgenommen sind. Zur Behebung dieses Mangels ist bei einer besonders bevorzugten Ausführungsform der Erfindung vorgesehen, dass mindestens ein Randbereich der in dem Wickel der Wickelachse zugewandten (abgewandten) inneren(äußeren) Scheibe mit größerem Spiel bezüglich der Stabilisierungseinrichtung gehalten ist als der entsprechende Randbereich der in dem Wickel der Wickelachse abgewandten (zugewandten) äußeren (inneren) Scheibe. Zu diesem Zweck kann der Abstand zwischen der Mündung der Aufnahme für den Randbereich der radial innenliegenden (außenliegenden) Scheibe und dem Boden dieser Aufnahme in Torblattbewegungsrichtung größer sein als der entsprechende Abstand der Aufnahme für den Randbereich der radial außenliegenden (innenliegenden) Scheiben. So kann ein möglicher Wegunterschied (Relativbewegung) durch die unterschiedlichen Bahnen der einzelnen Scheiben ausgeglichen werden.

Durch die beschriebene Doppelscheibenanordnung entsteht ein Luftpolster. Die entstandene Kammer kann im Bereich der parallel zur Torblattbewegungsrichtung verlaufenden Ränder der Scheiben geschlossen werden. Dazu kann ein im Bereich mindestens eines der parallel zur Torblattbewegungsrichtung verlaufenden Ränder mindestens eines Segments vorzugsweise zwischen einander zugewandten Begrenzungsflächen der Scheiben angeordnetes Füllmaterial vorgesehen sein, das bei einer bevorzugten Ausführungsform der Erfindung aus einem nachgiebigen Material, wie etwa einer elastischen Sprosse, ausgeführt sein kann. Als Füllmaterial können elastische Pads, wie etwa Schäume, verwendet werden, die eingeklebt oder mechanisch fixiert werden. Das Füllmaterial ermöglicht so auch die notwendige Beweglichkeit beim Bewegen des Torblatts in die Öffnungsstellung und aus der Öffnungsstellung heraus. Zusätzlich oder alternativ können auch fächerartige Kunststoffelemente als Füllmaterial verwendet werden, die scharnierartig miteinander verbunden sind und auf eine Scheibe aufgeklipst werden können.

Im Rahmen der Erfindung ist auch an den Einsatz von elastischen Pads oder von elastischen Fächerelementen bei Torblattsegmente mit nur einer Scheibe gedacht, um den Versatz zwischen der Scheibe und dem Verstärkungsprofil im Randbereich zu kompensieren. Dadurch kann eine Abdichtung zum Seitenteil des Tors realisiert werden. Da die Torblattsegmente eines erfindungsgemäßen Rolltors üblicherweise zumindest abschnittweise transparent ausgeführt sind, ist es im Rahmen der Erfindung besonders bevorzugt, wenn sich das Füllmaterial über 50 % oder weniger, insbesondere 20 % oder weniger, der Torblattbreite in einer parallel zur den Stabilisierungseinrichtungen verlaufenden Richtung erstreckt, so dass die Transparenz der Torblattsegmente nur geringfügig beeinträchtigt wird.

Im Sinne einer angestrebten thermischen Trennung zwischen Torblattinnenseite (Innenraum) und Torblattaußenseite (Außenraum) hat es sich als besonders zweckmäßig erwiesen, wenn mindestens eine Stabilisierungseinrichtung mindestens zwei in Torblattdickenrichtung voneinander beabstandete Stabilisierungselemente aufweist, die über ein Verbindungselement aus thermisch isolierendem Material miteinander verbunden sind. So kann bei Einsatz von Stabilisierungselementen mit ausreichender Festigkeit, wie etwa Stabilisierungselementen aus Stahl oder Aluminium, eine zufriedenstellende Stabilisierung ohne Beeinträchtigung der thermischen Trennung erreicht werden.

Im Sinne der Bereitstellung eines hohe Torlaufgeschwindigkeiten ermöglichenden Tors sind vorzugsweise im Bereich der in der Schließstellung zumindest abschnittweise in Schwererichtung verlaufenden seitlichen Ränder des Torblatts angeordnete und an dem Torblatt befestigte Gelenkanordnungen zur Führung der Torblattbewegung vorgesehen, die mit entsprechenden feststehenden Führungseinrichtungen, wie etwa Führungsschienen, zusammenwirken können, wobei jede der Gelenkanordnungen eine Mehrzahl von bezüglich senkrecht zur Bewegungsrichtung bzw. den seitlichen Rändern des Torblatts verlaufenden Gelenkachsen gelenkig miteinander verbundene Gelenkglieder aufweist, so dass das Torblatt über die Stabilisierungseinrichtungen mit den Gelenkanordnungen verbunden ist. Insofern entspricht der Aufbau erfindungsgemäßer Rolltore dem Aufbau der beispielsweise in der WO 2018/219512 A1 beschriebenen Tore. Der Offenbarungsgehalt dieser Schrift wird hinsichtlich der Ausführung der Gelenkanordnungen und der Führungsschiene sowie der Ankopplung der Stabilisierungseinrichtungen an die Gelenkanordnungen durch ausdrückliche Inbezugnahme in diese Beschreibung aufgenommen.

Entsprechend den bekannten Toren kann auch bei erfindungsgemäßen Rolltoren mindestens ein Segment aus biegsamem Material zwischen zwei Stabilisierungseinrichtungen angeordnet sein, wobei ein seitlicher, etwa senkrecht zu den Stabilisierungseinrichtungen sowie den Gelenkachsen und etwa parallel zu den Gelenkanordnungen und der Torblattbewegungsrichtung verlaufender Rand des Segments sich über zwei, drei oder mehr Gelenkglieder erstrecken kann und mindestens ein Randbereich des Segments schwimmend an einer Stabilisierungseinrichtung gehalten sein kann.

Dabei kann entsprechend der WO 2018/219512 A1 mindestens eine Stabilisierungseinrichtung sich etwa parallel zu einer Gelenkachse erstrecken und längs dieser Gelenkachse mit mindestens zwei, vorzugsweise mit mindestens zwei an einander entgegengesetzten seitlichen Torblatträndern vorgesehenen Gelenkanordnungen verbunden sein. Zur Erhöhung der Gesamtstabilität der Anordnung kann mindestens ein sich etwa parallel zum seitlichen Torblattrand bzw. der Torblattbewegungsrichtung erstreckender und an dem Torblatt befestigter Verstärkungsstreifen vorgesehen sein. Ähnlich wie bei Toren gemäß WO 2018/219512 A1 kann mindestens eine ggf. oval-spiralförmige Führungsbahn zur Führung der Torblattbewegung und zur Bestimmung der Öffnungsstellung des Torblatts vorgesehen sein, wobei mindestens ein Gelenkglied auf seiner dem Torblatt abgewandten Seite eine zur Führung der Torblattbewegung mit der Führungsbahn zusammenwirkende Führungsanordnung aufweisen kann, die vorzugsweise mindestens eine bezüglich einer parallel zu den Gelenkachsen verlaufenden Rollenachse drehbar gelagerte Führungsrolle umfasst, die vorzugsweise zumindest in der Öffnungsstellung des Torblatts in einer Führungsbahn aufgenommen ist.

Im Hinblick auf eine einfache Anpassung der Struktur des Torblatts eines erfindungsgemäßen Rolltors hat es sich als besonders zweckmäßig erwiesen, wenn eine sich parallel zu einer Gelenkachse erstreckende Stabilisierungseinrichtung nur mit den Gelenkanordnungen verbunden ist. Diese Ausführungsform der Erfindung ermöglicht es, die Stabilisierung des Torblatts bei gleichbleibender Ausgestaltung der einzelnen Torblattsegmente bzw. -scheiben variabel zu gestalten, wenn die nur mit den Gelenkanordnungen verbundene Stabilisierungseinrichtung unabhängig von den Abmessungen der einzelnen Torblattsegmente an den Gelenkanordnungen angebracht werden kann. Sie ist nicht an den Torblattsegmenten bzw. -scheiben befestigt. Die Anbringung dieser zusätzlichen Stabilisierungseinrichtung erfordert daher auch keine Anpassung der Geometrie der Torblattsegmente bzw. -scheiben. Die Variabilität der Anbringung dieser Stabilisierungseinrichtung wird lediglich durch die Teilung der Gelenkglieder der Gelenkanordnung begrenzt.

Wenn ein zusätzlicher Anfahrschutz für erfindungsgemäße Rolltore bereitgestellt werden soll, kann die nur mit den Gelenkanordnungen verbundene Stabilisierungseinrichtung zwischen unteren und mit den Scheiben des Rolltors verbundenen Stabilisierungseinrichtungen angeordnet sein. Im Rahmen der Erfindung hat es sich jedoch als besonders zweckmäßig erwiesen, wenn die nicht mit den Torblattsegmenten verbundene Stabilisierungseinrichtung zwischen den beiden oberen mit den Segmenten verbundenen Stabilisierungseinrichtungen angeordnet ist. So kann eine an die Höhe der Wandöffnung angepasste Abdichtung im Sturzbereich der Wandöffnung verwirklicht werden, ohne die Geometrie der Torblattsegmente und der übrigen Bestandteile des erfindungsgemäßen Rolltors ändern zu müssen.

In diesem Zusammenhang hat es sich als besonders zweckmäßig erwiesen, wenn die nur mit den Gelenkanordnungen, nicht aber mit den Torblattsegmenten verbundene Stabilisierungseinrichtung an ihrer dem benachbarten Torblattsegment abgewandten Seite eine an einen Sturz der Wandöffnung anlegbare Dichtungsanordnung aufweist und/oder an ihrer dem Segment zugewandten Seite mindestens einen sich etwa parallel zu den Gelenkachsen vorzugsweise über im Wesentlichen die gesamte Torbreite erstreckenden und an das benachbarte Segment anlegbaren Dichtstreifen aufweist.

Gemäß einer besonders bevorzugten Ausführungsform der Erfindung kann der bei einer Öffnungsbewegung vorlaufende Rand des Torblatts durch eine drehfest mit einem in der Schließstellung oberen Rand eines Segments aus einem biegsamen Material verbundene vorlaufende Stabilisierungseinrichtung gebildet sein, die drehfest mit einer Führungsanordnung verbunden ist. Durch diese Anordnung wird ein unerwünschtes Auswölben des Torblattsegments verhindert, wie in der WO 2018/219512 im Einzelnen erläutert ist.

Zum Erhalt eines dichten Führungsabschlusses hat es sich als zweckmäßig erwiesen, wenn mindestens einem Gelenkglied einer Gelenkanordnung eine in der Schließstellung an einer Begrenzungsfläche, insbesondere die innere Begrenzungsfläche, des Torblatts anlegbare Dichtungsanordnung zugeordnet ist, wie in der WO 2018/219512 im Einzelnen erläutert. Ferner kann auch im Rahmen dieser Erfindung eine im Verlauf der Öffnungsbewegung an einen bei einer Öffnungsbewegung nachlaufenden Rand des Torblatts koppelbaren und im Verlauf der Öffnungsbewegung vorspannbare Vorspanneinrichtung zum Abbremsen der Öffnungsbewegung und zum Bereitstellen einer das Torblatt von der Öffnungsstellung in die Schließstellung drängende Vorspannkraft vorgesehen sein.

Wie der vorstehenden Erläuterung zu entnehmen ist, weist ein erfindungsgemäßes Rolltor zweckmäßigerweise eine Führungseinrichtung zum Führen der Torblattbewegung zwischen der Öffnungsstellung und der Schließstellung auf. Dabei wird die Erfindung mit besonderem Vorteil bei solchen Toren eingesetzt, die eine hohe Torlaufgeschwindigkeit ermöglichen. Zu diesem Zweck kann die Führungseinrichtung eine berührungslose magnetische Führung ermöglichen. Dazu kann die Führungseinrichtung eine torblattseitige Magnetfelderzeugungseinrichtung und eine bezüglich der Wandöffnung feststehende Magnetfelderzeugungseinrichtung aufweisen, wobei die Magnetfelderzeugungseinrichtungen zum Erhalt einer berührungsfreien Führung der Torblattbewegung längs mindestens eines Abschnitts der vorgegebenen Bahn im Bereich mindestens eines der einander entgegengesetzten seitlichen Ränder ausgelegt sind.

Entsprechende Führungsanordnungen sind in der PCT/EP2019/058221 beschrieben. Der Offenbarungsgehalt dieser Schrift hinsichtlich der Führungseinrichtungen und der Magnetfelderzeugungsanordnungen wird hiermit durch ausdrückliche Inbezugnahme in diese Beschreibung aufgenommen. Von besonderer Bedeutung ist in diesem Zusammenhang, dass die Führungsanordnung mindestens einen bezüglich der Wandöffnung feststehend angeordneten und sich längs eines Abschnitts der vorgegebenen Bahn erstreckenden Führungssteg mit zwei äußeren Begrenzungsflächen und mindestens zwei an dem Torblatt befestigten Führungseinrichtungen aufweist, wobei eine erste äußere Begrenzungsfläche des Führungsstegs eine Führungsfläche für eine erste Führungseinrichtung bildet und eine zweite äußere Begrenzungsfläche des Führungsstegs eine zweite Führungsfläche für eine Führungseinrichtung bildet, so dass der Führungssteg zwischen den am Torblatt befestigten Führungseinrichtungen aufgenommen ist. Dabei kann mindestens eine Führungseinrichtung alternativ oder zusätzlich zu den Magnetfelderzeugungseinrichtungen eine bezüglich einer senkrecht zu der vorgegebenen Bahn und in der Schließstellung etwa parallel zum Torblatt verlaufenden Rollenachse drehbar gelagerte Führungsrolle aufweisen, die bei einer Torblattbewegung auf einer Führungsfläche des Torblatts abrollt.

Falls eine berührungsfreie Führung der Torblattbewegung mit Hilfe von Magnetfelderzeugungseinrichtungen zum Einsatz kommt, kann mindestens eine Magnetfelderzeugungseinrichtung, vorzugsweise mindestens eine torblattseitige Magnetfelderzeugungseinrichtung, mindestens einen Permanentmagneten aufweisen. Zweckmäßigerweise kann die torblattseitige Magnetfelderzeugungseinrichtung zwei auf einander entgegengesetzten Seiten des Führungsstegs angeordnete Permanentmagneten aufweisen, die an einem gemeinsamen, einen torblattseitigen Rand des Führungsstegs übergreifenden Träger festgelegt sind. Weitere Einzelheiten der Magnetfelderzeugungseinrichtungen sind in der PCT/EP2019/058221 erläutert, deren Offenbarungsgehalt auch hinsichtlich der Magnetfelderzeugungseinrichtungen hiermit durch ausdrückliche Inbezugnahme in diese Beschreibung mit aufgenommen wird.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich Bezug genommen wird, erläutert. In der Zeichnung zeigt:
- Fig. 1: eine schematische Darstellung eines seitlichen Randbereichs eines Rolltors,
- Fig. 2: eine Detaildarstellung des in Fig. 1 mit A bezeichneten Übergangs zwischen Torblattsegmenten und einer Stabilisierungseinrichtung,
- Fig. 3: eine der Fig. 2 entsprechende Detaildarstellung gemäß einer weiteren Ausführungsform eines Rolltors,
- Fig. 4: eine schematische Darstellung eines seitlichen Randbereichs eines erfindungsgemäßen Rolltors,
- Fig. 5: eine schematische Darstellung eines erfindungsgemäßen Rolltors gemäß einer zweiten Ausführungsform der Erfindung,
- Fig. 6: eine schematischen Darstellung eines erfindungsgemäßen Rolltors gemäß einer dritten Ausführungsform der Erfindung,
- Fig. 7: eine schematische Darstellung einer Produktionsanlage für die Scheiben eines erfindungsgemäßen Rolltors.

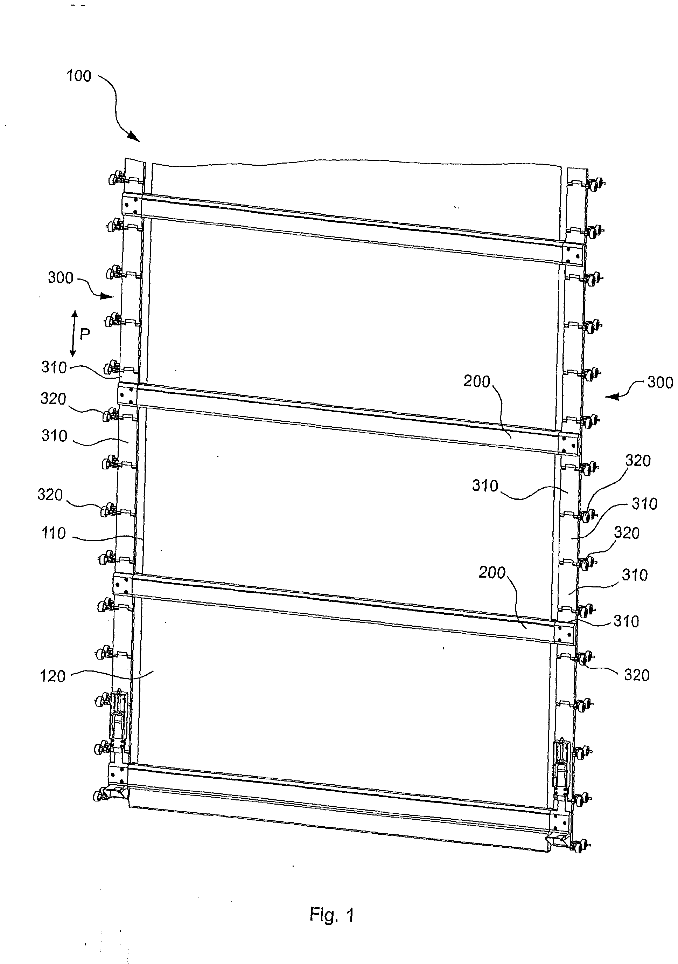

Fig. 1 zeigt zwei in der durch den Doppelpfeil P angedeuteten Torblattbewegungsrichtung hintereinander angeordnete Torblattsegmente 110 und 120 eines Torblatts 100 eines Rolltors.

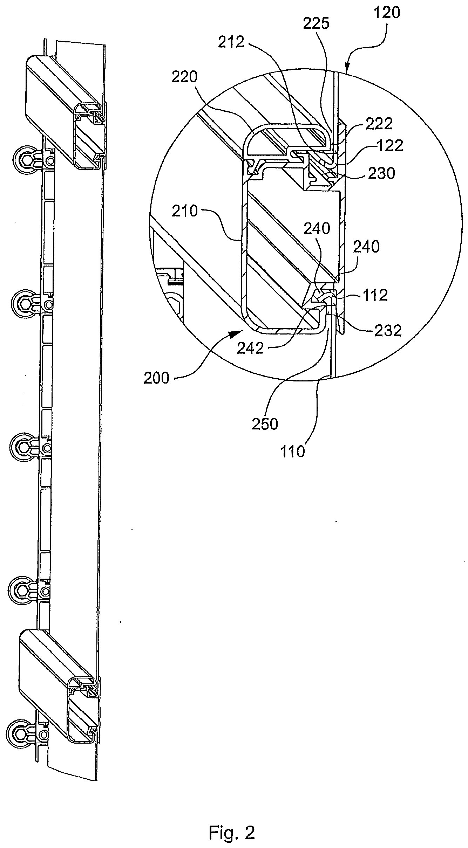

Zwischen den Torblattsegmenten 110 und 120 ist eine als Stabilisierungsprofil 200 ausgeführte Stabilisierungseinrichtung angeordnet. Das Stabilisierungsprofil 200 erstreckt sich in einer senkrecht zur Torblattbewegungsrichtung P verlaufenden Richtung etwa in der Torblattebene. Ein unterer Rand des oberen Torblattsegments 120 ist im Bereich einer oberen Aufnahme 230 (vgl. Fig. 2) des Stabilisierungsprofils 200 schwimmend gehalten, während ein oberer Rand des unteren Torblattsegments 110 in einer unteren Aufnahme 240 (vgl. Fig. 2) des Stabilisierungsprofile 200 schwimmend gehalten ist. Ein oberer Rand des Torblattsegments 120 ist an einem weiteren Stabilisierungsprofil 200 gehalten, ebenso wie ein unterer Rand des Torblattsegments 110 auch an einem unteren Stabilisierungsprofil 200 gehalten ist.

Die Stabilisierungsprofile 200 sind an einer sich etwa parallel zur Torblattbewegungsrichtung erstreckenden bzw. parallel zu einem seitlichen Rand des Torblatts 100 erstreckenden Gelenkanordnung 300 befestigt. Die Gelenkanordnung 300 umfasst eine Mehrzahl von in Torblattbewegungsrichtung hintereinander angeordneten und bezüglich senkrecht zur Torblattbewegungsrichtung P verlaufenden Gelenkachsen gelenkig miteinander verbundenen Gelenkgliedern 310. Dabei sind zwischen zwei benachbarten Stabilisierungsprofilen 200 jeweils drei Gelenkglieder 310 angeordnet. Bei anderen Ausführungsformen können auch nur ein oder zwei oder vier oder mehr Gelenkglieder zwischen den Stabilisierungsprofilen 200 vorgesehen sein. Es kann auch im Bereich jeder Verbindung zwischen aufeinanderfolgenden Gelenkgliedern ein Stabilisierungsprofil vorgesehen sein.

Die Gelenkanordnung weist auf ihrer den Torblattsegmenten 110 und 120 abgewandten Seite Führungsrollen 320 auf, die bezüglich parallel zu den Gelenkachsen verlaufenden Rollenachsen drehbar gelagert sind. Die Führungsrollen 320 sind jeweils paarweise im Bereich einer Gelenkachse angeordnet, derart, dass sie einen Führungssteg zwischen sich aufnehmen können und auf einander entgegengesetzten Begrenzungsflächen des Führungsstegs abrollen können, um so eine Führung der Torblattbewegung zu ermöglichen, wie sie in der PCT/EP2019/058221 beschrieben ist.

Wie besonders deutlich in Fig. 2 zu erkennen ist, ist ein sich parallel zu den Gelenkachsen und parallel zu dem Stabilisierungsprofil 200 erstreckender oberer Randbereich 112 des Torblattsegments 110 in einer Aufnahme 240 des Stabilisierungsprofils 200 angeordnet. Der obere Rand 112 des Torblattsegments 110 ist durch Umbiegen des oberen Rands des Torblattsegments 112 auf sich selbst als Erweiterung in einer sich senkrecht zu der durch die Torblattbewegungsrichtung P und das Stabilisierungsprofil 200 bestimmten Torblattebene ausgeführt. Ausgehend von der Erweiterung 112 erstreckt sich das Torblattsegment 110 mit einem Übergangsbereich durch eine Mündung 250 des Stabilisierungsprofils 200 nach unten und liegt außerhalb der Mündung 250 frei, wie in Fig. 1 zu erkennen ist. Ebenso weist das Torblattsegment 120 eine in einer Aufnahme 230 des Stabilisierungsprofils 200 aufgenommene Erweiterung 122 auf. Ausgehend von der Erweiterung 122 erstreckt sich das Torblattsegment 120 mit einem Übergangsbereich durch eine Mündung 225 nach oben und liegt außerhalb der Mündung 225 frei.

Die Mündung 250 wird von Begrenzungsflächen 232 und 242 begrenzt, deren Abstand voneinander in einer parallel zu der Torblattdickenrichtung verlaufenden Richtung geringer ist als die Dicke der Erweiterung 112, aber größer als die Dicke des Übergangsbereichs des Torblattsegments 110 zwischen der Erweiterung 112 und dem außerhalb des Stabilisierungsprofils 200 freiliegenden Bereich. Ebenso wird die Mündung 225 von Begrenzungsflächen 212 und 222 begrenzt, deren Abstand in der Torblattdickenrichtung geringer ist als die Dicke der Erweiterung 122, aber größer als die Dicke eines Übergangsbereichs zwischen der Erweiterung 122 und dem außerhalb des Stabilisierungsprofils 200 freiliegenden Bereich des Torblattsegments 120.

Wie weiter in Fig. 2 zu erkennen ist, ist das Stabilisierungsprofil 200 zweiteilig aus zwei lösbar miteinander verbundenen Teilen 210 und 220 ausgeführt. Dabei wird die Ausnehmung 240 am unteren Rand des Stabilisierungsprofils 200 vollständig durch das erste Stabilisierungsprofilteil 210 gebildet, während die Aufnahme 230 am oberen

Rand des Stabilisierungsprofils 200 durch die beiden Stabilisierungsprofilteile 210 und 220 gebildet wird. Eine erste Begrenzungsfläche 212 der Mündung 225 wird durch das erste Stabilisierungsprofilteil 210 gebildet, während eine zweite Begrenzungsfläche 222 der Aufnahme 230 durch das zweite Stabilisierungsprofilteil 220 gebildet wird.

Zur Montage eines Rolltors der in der Zeichnung dargestellten Art kann ein oberer Rand eines Torblattsegments in einer parallel zu dem Stabilisierungsprofil 200 verlaufenden Richtung in die Aufnahme 240 eingeschoben werden, wobei ein Übergangsbereich zwischen der Erweiterung 240 und einem außerhalb des Stabilisierungsprofils 200 freiliegenden Bereich des Torblattsegments die Mündung 250 durchsetzt. Das so vorbereitete Modul kann in eine Führungseinrichtung, die aus einem zwischen den Führungsrollen 320 angeordneten Führungssteg bestehen kann, eingefädelt werden. Anschließend kann ein unterer Rand 122 des Torblattsegments an eine Begrenzungsfläche 212 des ersten Stabilisierungsprofilteils 210 angelegt und das zweite Stabilisierungsprofil 220 auf das erste Stabilisierungsprofil 210 zur Bildung der Mündung 225 aufgeklipst werden, welche von dem Übergangsbereich zwischen einer in der Aufnahme 230 aufgenommenen Erweiterung des Torblattsegments und einem außerhalb des Stabilisierungsprofils 200 freiliegenden Bereich des Torblattsegments durchsetzt wird.

Der Abstand zwischen den einander gegenüberliegenden Begrenzungsflächen 212 und 222 bzw. 232 und 242 der Mündungen 225 bzw. 250 ist größer als die Dicke der diese Mündungen durchsetzenden Übergangsbereiche. Dadurch wird eine Klemmwirkung im Bereich der Übergangsbereiche verhindert.

Ferner ist der Abstand zwischen der Mündung 225 bzw. 250 und der den entsprechenden Mündungen 225 bzw. 250 gegenüberliegenden Böden der Aufnahmen 230 und 240 größer als die Länge der Erweiterungen 122 bzw. 112 in Torblattbewegungsrichtung. Dadurch wird eine Relativbewegung der Torblattsegmente 110 und 120 bezüglich des Stabilisierungsprofils 200 ermöglicht.

Im Bereich des Bodens der Aufnahme 230 kann ein Dichtungsmaterial angeordnet sein, welches ggf. bei Eindringen von Feuchtigkeit aufquillt.

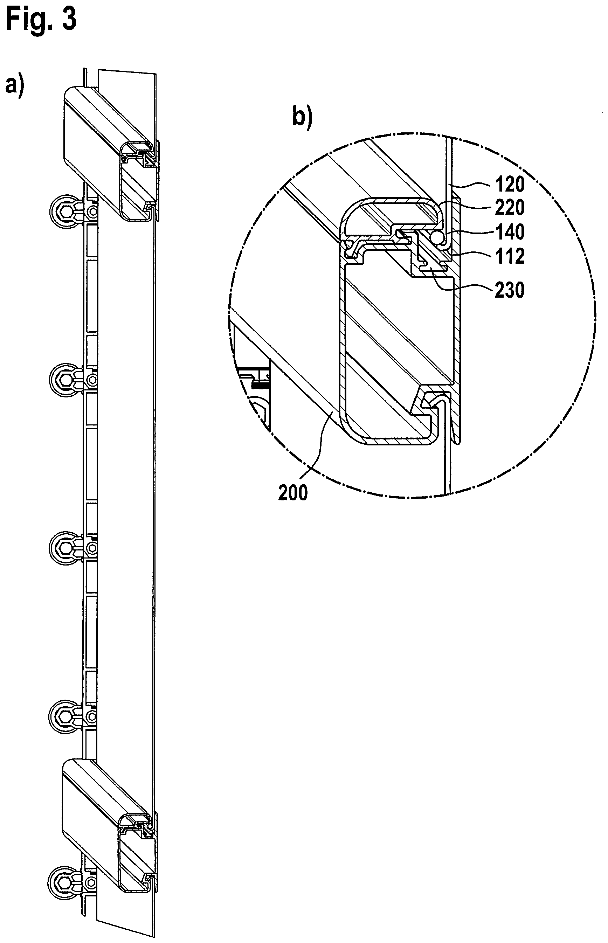

Die in Fig. 3 dargestellte Ausführungsform unterscheidet sich im Wesentlichen dadurch von der anhand der Fig. 2 erläuterten Ausführungsform, dass zwischen dem die Erweiterung 122 bildenden umgebogenen unteren Rand der Scheibe 120 und der unteren Begrenzungsfläche des Teils 220 des Stabilisierungsprofil 200 ein Dämpfungselement 230 angeordnet ist, welches zum einen eine Abdichtung der schwimmend in dem Stabilisierungsprofil 200 gelagerten Scheibe 120 bewirkt, und andererseits eine Vorspannung der in dem Stabilisierungsprofil 200 schwimmend gelagerten Scheibe 120 bereitstellt, die Toleranzen auszugleichen hilft und die Scheibe 120 straff in ihrer Position hält. Ferner wird durch das Dämpfungselement 140 eine Geräuschentwicklung reduziert, welche auftreten kann, wenn der umgebogene untere Rand der Scheibe 120 in der Aufnahme 230 bewegt wird und gegen die untere Begrenzungsfläche des Teils 220 des Stabilisierungsprofils schlägt.

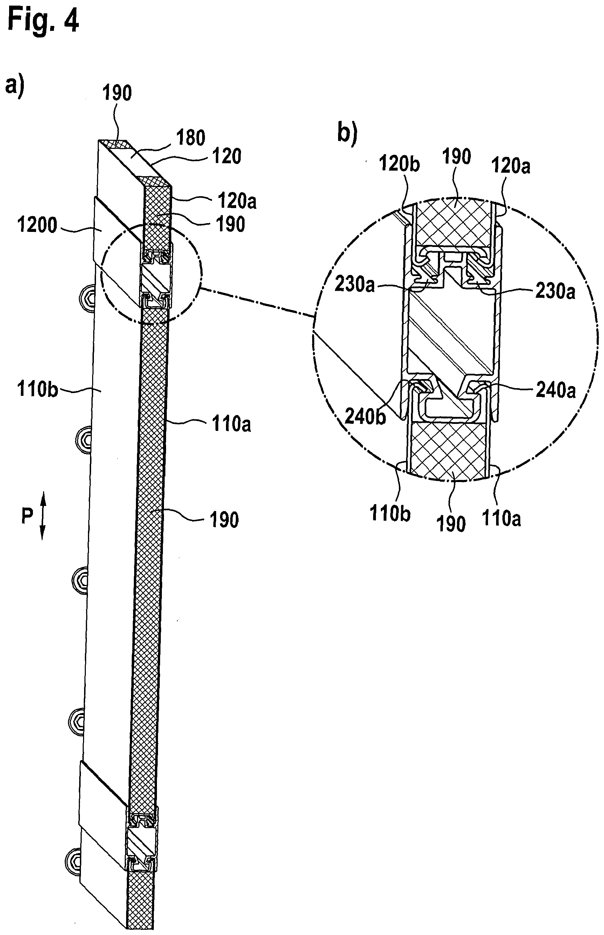

Die in Fig. 4 dargestellte Ausführungsform der Erfindung unterscheidet sich im Wesentlichen dadurch von der anhand der Figuren 1 und 2 dargestellten Ausführungsform, dass die Torblattsegmente zwei im Wesentlichen parallel zueinander verlaufende Scheiben 120a und 120b bzw. 110a und 110b aufweisen, die jeweils als biegsame Polycarbonatscheiben ausgeführt sind. Die unteren Ränder der Scheiben 120a und 120b sind jeweils mit einer durch Umbiegen dieser Ränder gebildeten Erweiterung ausgestattet, die schwimmend in Aufnahmen 230a und 230b des Stabilisierungsprofils 1200 gelagert sind. Die oberen Ränder der Scheiben 110a und 110b des unteren Segments sind in Aufnahmen 240a und 240b des Stabilisierungsprofils 1200 gehalten. Zwischen den Scheiben 120a und 120b bzw. 110a und 110b ist ein den Wärmeschutz begünstigendes Luftpolster 180 gebildet. Das Luftpolster 180 wird an den parallel zur Bewegungsrichtung P der Segmente 120 und 110 verlaufenden Rändern durch zwischen den Scheiben 120a und 120b bzw. 110a und 110b vorgesehene elastische Polster 190 geschlossen. Diese Polster 190 können als elastische Sprossen ausgeführt sein. Es können beispielsweise elastische Pads aus einem schaumförmigen Material eingesetzt werden, die eingeklebt oder mechanisch fixiert werden. Die elastische Ausführung der Polster 190 ermöglicht auch die notwendige Beweglichkeit beim Einwickeln des Torblatts in die spiralförmige Führungsbahn bei Erreichen der Öffnungsstellung.

Zusätzlich oder alternativ können in der Kammer 180 auch fächerartige Kunststoffelemente, die scharnierartig miteinander verbunden sind, auf die Scheibe aufgeklipst werden. Es ist auch an den Einsatz entsprechender elastischer Pads oder elastischer Fächerelemente bei Torblattsegmenten mit nur einer Scheibe, wie sie in Figur 1 und 2 dargestellt sind, gedacht, um den Versatz zwischen Scheibe und Stabilisierungsprofil im Wandbereich zu kompensieren. Dadurch kann die Abdichtung des Torblatts in der Schließstellung verbessert werden.

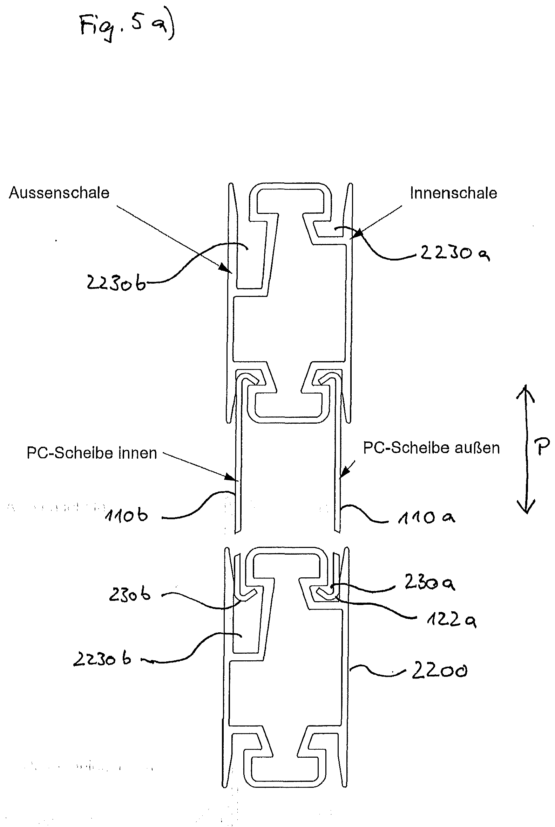

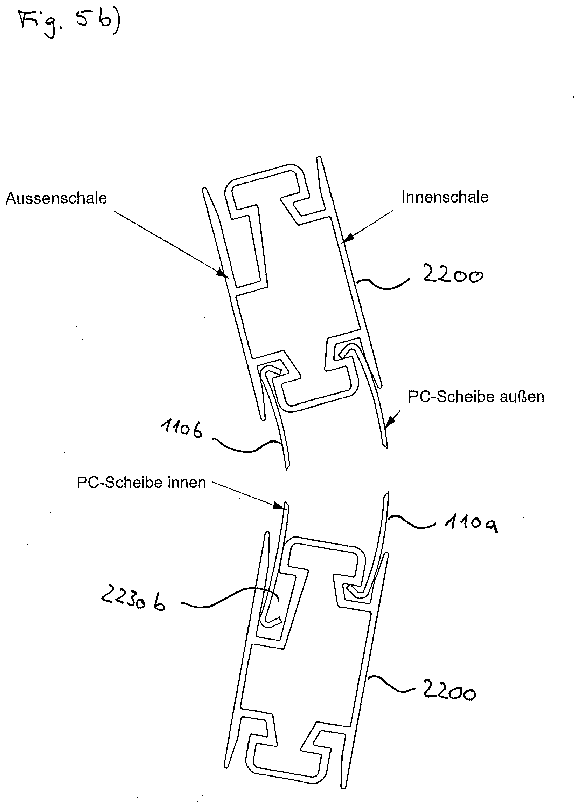

Die in Fig. 5 dargestellte Ausführungsform der Erfindung unterscheidet sich im Wesentlichen dadurch von der anhand der Fig. 4 erläuterten Ausführungsform, dass die Kammer 2230b des Stabilisierungsprofils 2200, die zur Aufnahme der Erweiterung 230b am unteren Rand der Scheibe 110b dient, in der Torblattbewegungsrichtung eine größere Tiefe aufweist als die Kammer 230a, die zur Aufnahme der am unteren Rand der Scheibe 110a gebildeten Erweiterung 122a dient. Dadurch wird erreicht, dass die in der Öffnungsstellung radial innenliegende Scheibe 110b mit größerem Spiel in der Aufnahme 230b gelagert ist, als die in der Öffnungsstellung radial außenliegende Scheibe 110a. Dadurch kann die unterschiedliche Verformung der Scheiben 110a bzw. 110b bei Erreichen der Öffnungsstellung des Torblatts ausgeglichen werden, wie in Fig. 5b) verdeutlicht.

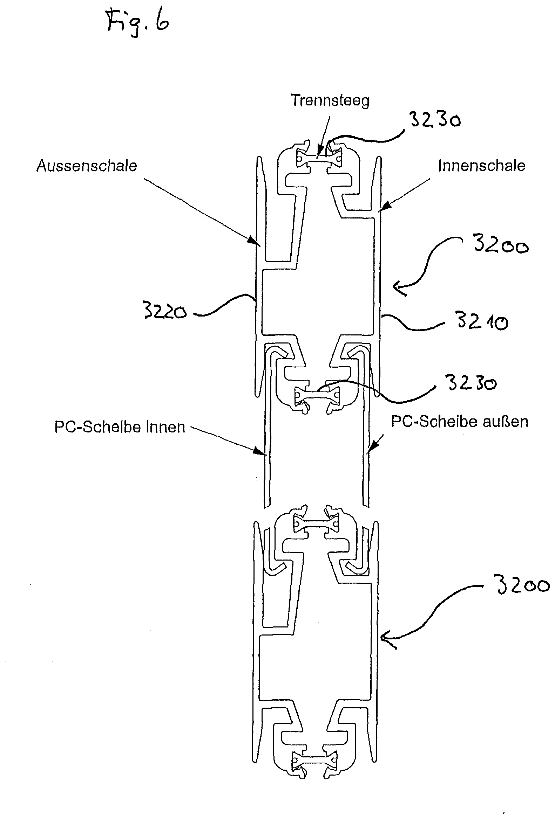

Die in Fig. 6 dargestellte Ausführungsform der Erfindung unterscheidet sich im Wesentlichen dadurch von der anhand der Fig. 5 erläuterten Ausführungsform der Erfindung, dass die Stabilisierungsprofile 3200 insgesamt dreiteilig ausgeführt sind, wobei die Teile 3210, 3220, 3230 in Torblattdickenrichtung aufeinanderfolgend ausgeführt sind. Das in der Schließstellung des Torblatts innenliegende Teil 3210 ist ebenso wie das in der Schließstellung außenliegende Teil 3220 des Stabilisierungsprofils 3200 aus einem metallischen Material ausgeführt. Dadurch wird dem Stabilisierungsprofil die notwendige Stabilität verliehen. Die Teile 3210 und 3220 sind über Verbindungselemente 3230 aus thermisch isolierendem Material, wie etwa Kunststoff, miteinander verbunden. So kann bei Gewährleistung einer ausreichenden Gesamtstabilität der Stabilisierungsprofile 3200 ein Wärmeverlust zwischen Innenraum und Außenraum über die Stabilisierungsprofile 3200 wirkungsvoll reduziert werden.

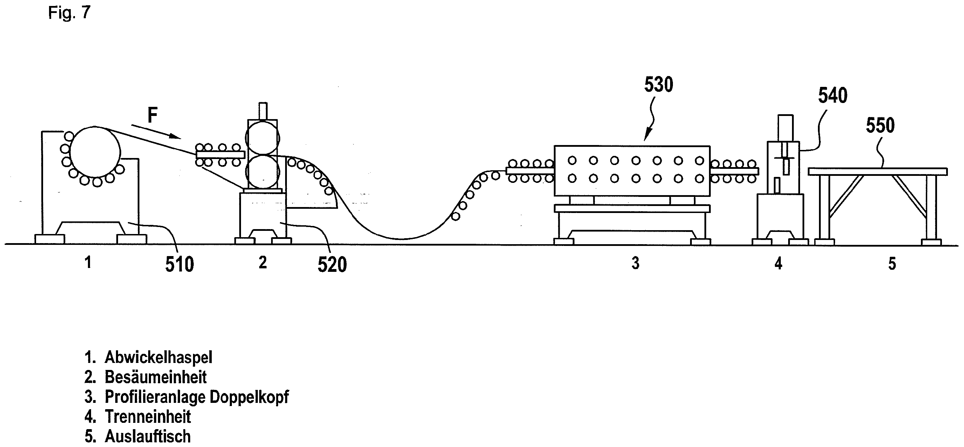

In Fig. 7 ist eine Anlage zur Herstellung von Scheiben für die Torblattsegmente erfindungsgemäßer Rolltore schematisch dargestellt. Bei Einsatz der in Fig. 8 dargestellten Anlage wird eine zumindest teilweise aus Polycarbonat bestehende Kunststoffbahn als Coilware kontinuierlich von einer Abwickelhaspel 510 in einer Förderrichtung F abgewickelt. Die Kunststoffbahn durchläuft eine Besäumeinheit 520, in der die exakte Breite der Kunststoffbahn eingestellt wird und danach eine Doppelkopfprofilieranlage 530, in der die parallel zur Förderrichtung F verlaufenden Ränder der Kunststoffbahn zur Schaffung der Erweiterung der Scheiben umgebogen werden. Die Profilieranlage weist, wie in Fig. 8 erkennbar ist, eine Vielzahl von Formgebungsrollen auf, mit denen die Ränder der Materialbahn schrittweise umgebogen werden. Nach Verlassen der Doppelkopfprofilieranlagen 530 werden Scheiben vorgegebener Länge mit Hilfe einer Trenneinheit 540 längs einer senkrecht zur Förderrichtung F verlaufenden Trennlinie von der Materialbahn abgeschnitten und auf einem Auslauftisch 550 abgelegt.

Die Erfindung ist nicht auf das anhand der Zeichnung erläuterte Ausführungsbeispiel beschränkt. Beispielsweise können die Erweiterungen im Bereich der Ränder der Torblattsegmente auch durch aufgeklebte oder angeschweißte Keder gebildet sein. Die Stabilisierungsprofile 200 können insgesamt einteilig ausgeführt sein, so dass die erweiterten Ränder der Torblattsegmente seitlich in die Stabilisierungsprofile eingeschoben werden müssen. Anstelle einer Führungsanordnung, bei der zwei Führungsrollen an einander entgegengesetzten Begrenzungsflächen eines Führungsstegs anliegen, können auch Führungsanordnungen zum Einsatz kommen, bei denen Führungsrollen in einer Führungsschiene aufgenommen sind. Anstelle der Führung mittels Führungsrollen kann auch eine berührungsfreie Magnetführung zum Einsatz kommen.

## Patentansprüche

1. Rolltor mit einem zwischen einer Öffnungsstellung, in der es eine Wandöffnung zumindest teilweise freigibt und zumindest teilweise oberhalb der Wandöffnung vorzugsweise einen mehrlagigen Wickel bildet, und einer Schließstellung, in der es die Wandöffnung zumindest teilweise verschließt, bewegbaren Torblatt, das eine Mehrzahl von in Torblattbewegungsrichtung hintereinander angeordneten Torblattsegmenten aufweist, wobei mindestens eine sich senkrecht zur Torblattbewegungsrichtung erstreckende Stabilisierungseinrichtung (1200, 2200) zwischen zwei Torblattsegmenten angeordnet ist und die einander zugewandten Randbereiche der Torblattsegmente an der Stabilisierungseinrichtung (1200, 2200) gehalten sind, wodurch mindestens ein Randbereich mindestens eines Segments derart schwimmend an der Stabilisierungseinrichtung (1200, 2200)gehalten ist, dass eine Relativbewegung dieses Randbereichs bezüglich der Stabilisierungseinrichtung (1200, 2200) zumindest in Torblattbewegungsrichtung möglich ist und mindestens ein einen schwimmend gelagerten Randbereich aufweisendes Segment mindestens eine Scheibe (110a, 110b, 120a, 102b) aufweist, die zumindest abschnittweise aus einem biegsamen Material, wie etwa Polycarbonat, gebildet ist, **dadurch gekennzeichnet, dass** das mindestens ein einen schwimmend gelagerten Randbereich aufweisende Segment mindestens zwei in Torblattdickenrichtung voneinander beabstandete und etwa parallel zueinander verlaufende Scheiben (110a, 110b, 120a, 102b) aufweist, von denen jede mindestens einen an der Stabilisierungseinrichtung (1200, 2200) gehaltenen und einem benachbarten Segment zugewandten Randbereich aufweist, wobei mindestens ein Randbereich mindestens einer Scheibe (110a, 110b, 120a, 102b) derart schwimmend an der Stabilisierungseinrichtung (1200, 2200) gehalten ist, dass eine Relativbewegung dieses Randbereichs bezüglich der Stabilisierungseinrichtung (1200, 2200) zumindest in Torblattbewegungsrichtung möglich ist.

2. Rolltor nach Anspruch 1, **gekennzeichnet durch** eine die Relativbewegung des schwimmend gehaltenen Randbereichs bezüglich der Stabilisierungseinrichtung (1200, 2200) begrenzende Begrenzungsanordnung.

3. Rolltor nach Anspruch 2, **dadurch gekennzeichnet, dass** die Begrenzungsanordnung eine Erweiterung des schwimmend gehaltenen Randbereichs in einer senkrecht zu der durch die Torblattbewegungsrichtung und die Stabilisierungseinrichtung (1200, 2200) aufgespannten Torblattebene verlaufenden Dickenrichtung und eine in der Stabilisierungseinrichtung gebildete Aufnahme (230a, 230b, 2230b) für die Erweiterung des daran schwimmend gehaltenen Randbereichs aufweist, wobei die Aufnahme (230a, 230b, 2230b) eine von einem Übergangsbereich des Segments zwischen der Erweiterung und einem außerhalb der Stabilisierungseinrichtung (1200, 2200) freiliegenden Bereich des Segments durchsetzte Mündung aufweist, deren Breite in Dickenrichtung größer ist als die Dicke des Übergangsbereichs in Dickenrichtung, aber geringer als die Abmessungen der Erweiterung in Dickenrichtung.

4. Rolltor nach Anspruch 3, **dadurch gekennzeichnet, dass** die Aufnahme (230a, 230b, 2230b) auf ihrer der Mündung gegenüberliegenden Seite von einem Boden begrenzt ist, wobei der Abstand zwischen der Mündung und dem Boden in Torblattbewegungsrichtung größer ist als die Länge der Erweiterung des schwimmend gehaltenen Randbereichs in Torblattbewegungsrichtung.

5. Rolltor nach Anspruch 3 oder 4, **dadurch gekennzeichnet, dass** mindestens eine Erweiterung durch Biegen des schwimmend gehaltenen Randbereichs bezüglich einer parallel zur Stabilisierungseinrichtung (1200, 2200) verlaufenden Biegeachse gebildet ist.

6. Rolltor nach einem der Ansprüche 3 bis 5, **dadurch gekennzeichnet, dass** mindestens eine Erweiterung durch eine Verdickung des Randbereichs, insbesondere durch Ankleben und/oder Anschweißen eines Keders gebildet ist.

7. Rolltor nach einem der Ansprüche 3 bis 6, **dadurch gekennzeichnet, dass** mindestens eine Erweiterung durch ein form-, kraft- und/oder stoffschlüssig an einem Randbereich mindestens eines Torblattsegments gehaltenes Erweiterungselement, wie etwa eine Erweiterungsklammer, gebildet ist.

8. Rolltor nach einem der vorhergehenden Ansprüche, **dadurch gekennzeichnet, dass** die Stabilisierungseinrichtung (1200, 2200) mindestens zwei lösbar miteinander verbundene Aufnahmeteile aufweist, welche einander gegenüberliegende Begrenzungsflächen der Mündung bilden.

9. Rolltor nach einem der vorhergehenden Ansprüche, **gekennzeichnet durch** im Bereich der in der Schließstellung zumindest abschnittweise in Schwererichtung verlaufenden seitlichen Ränder des Torblatts angeordnete und an dem Torblatt befestigte Gelenkanordnungen zur Führung der Torblattbewegung, von denen jede eine Mehrzahl von bezüglich senkrecht zur Bewegungsrichtung bzw. den seitlichen Rändern des Torblatts verlaufenden Gelenkachsen gelenkig miteinander verbundenen Gelenkgliedern aufweist, wobei das Torblatt über die Stabilisierungseinrichtungen (1200, 2200) mit den Gelenkanordnungen verbunden ist.

10. Rolltor nach einem der Ansprüche 3 bis 9, **gekennzeichnet durch** ein vorzugsweise zwischen der Erweiterung und der Mündung in der Aufnahme aufgenommenes Dichtungsmaterial.

11. Rolltor nach einem der Ansprüche 8 bis 10, **dadurch gekennzeichnet, dass** die Stabilisierungseinrichtung zwei in Torblattbewegungsrichtung voneinander beabstandete Aufnahmen aufweist, von denen die in der Schließstellung obere Aufnahme von zwei lösbar miteinander verbundenen Aufnahmeteilen begrenzt ist.

12. Rolltor nach einem der vorhergehenden Ansprüche, **dadurch gekennzeichnet, dass** mindestens eine Stabilisierungseinrichtung (1200, 2200) zwei in Torblattdickenrichtung voneinander beabstandete Aufnahmen (230a, 230b, 2230b) zur Aufnahme jeweils eines Randbereichs einer Scheibe (110a, 110b, 120a, 102b) eines Torblattsegments aufweist.

13. Rolltor nach einem der vorhergehenden Ansprüche, **dadurch gekennzeichnet, dass** mindestens ein Randbereich der in dem Wickel der Wickelachse zugewandten (abgewandten) inneren (äußeren) Scheibe (110a, 110b, 120a, 102b) mit größerem Spiel bezüglich der Stabilisierungseinrichtung (1200, 2200) gehalten ist als der entsprechende Randbereich der in dem Wickel der Wickelachse abgewandten (zugewandten) äußeren (inneren) Scheibe (110a, 110b, 120a, 102b) des Torblattsegments.

14. Rolltor nach einem der vorhergehenden Ansprüche, **gekennzeichnet durch** ein an mindestens einem der parallel zur Torblattbewegungsrichtung verlaufenden Ränder mindestens eines Torblattsegments, vorzugsweise zwischen einander zugewandten Begrenzungsflächen der Scheiben (110a, 110b, 120a, 102b), angeordnetes Füllmaterial (190), vorzugsweise aus nachgiebigem Material.

15. Rolltor nach Anspruch 14, **dadurch gekennzeichnet, dass** sich das Füllmaterial (190) über 50 % oder weniger, insbesondere 20 % oder weniger der Torblattbreite in einer parallel zu der Stabilisierungseinrichtung (1200, 2200) verlaufenden Richtung erstreckt.

16. Rolltor nach einem der vorhergehenden Ansprüche, **dadurch gekennzeichnet, dass** mindestens eine Stabilisierungseinrichtung (1200, 2200) zwei in Torblattdickenrichtung voneinander beabstandete Stabilisierungselemente (3210, 3220) aufweist, die über ein Verbindungselement (3230) aus thermisch isolierendem Material miteinander verbunden sind.

17. Rolltor nach einem der vorhergehenden Ansprüche, **dadurch gekennzeichnet, dass** mindestens ein Segment aus biegsamem Material zwischen zwei Stabilisierungseinrichtungen angeordnet ist, wobei sich ein seitlicher, senkrecht zu den Stabilisierungseinrichtungen und etwa parallel zu den Gelenkanordnungen verlaufender Rand des Segments über zwei, drei oder mehr Gelenkglieder erstreckt und mindestens ein Randbereich des Segments schwimmend an einer Stabilisierungseinrichtung gehalten ist.

18. Rolltor nach einem der Ansprüche 9 bis 17, **dadurch gekennzeichnet, dass** mindestens eine Stabilisierungseinrichtung sich etwa parallel zu einer Gelenkachse erstreckt und längs dieser Gelenkachse mit mindestens einer, vorzugsweise mit zwei an einander entgegengesetzten seitlichen Torblatträndern vorgesehenen Gelenkanordnungen verbunden ist.

19. Rolltor nach einem der Ansprüche 9 bis 18, **dadurch gekennzeichnet, dass** eine sich parallel zu einer Gelenkachse erstreckende Stabilisierungseinrichtung nur mit den Gelenkanordnungen verbunden ist.

20. Rolltor nach Anspruch 19, **dadurch gekennzeichnet, dass** die nur mit den Gelenkanordnungen verbundene Stabilisierungseinrichtung an ihrer dem Segment abgewandten Seite eine an einem Sturz der Wandöffnung anlegbare Dichtungsanordnung aufweist.

21. Rolltor nach Anspruch 19 oder 20, **dadurch gekennzeichnet, dass** die nur mit den Gelenkanordnungen verbundene Stabilisierungseinrichtung an ihrer dem Segment zugewandten Seite mindestens einen sich etwa parallel zu den Gelenkachsen vorzugsweise über im Wesentlichen die gesamte Torbreite erstreckenden und an das Segment anlegbaren Dichtstreifen aufweist.

22. Rolltor nach einem der vorhergehenden Ansprüche, **gekennzeichnet durch** mindestens einen sich parallel zum seitlichen Torblattrand erstreckenden und an dem Torblatt befestigten Verstärkungsstreifen.

23. Rolltor nach einem der vorhergehenden Ansprüche, **gekennzeichnet durch** mindestens eine ggf. oval-spiralförmige Führungsbahn zur Führung der Torblattbewegung und zur Bestimmung der Öffnungsstellung des Torblatts.

24. Rolltor nach Anspruch 23, **dadurch gekennzeichnet, dass** mindestens ein Gelenkglied auf seiner dem Torblatt abgewandten Seite eine zur Führung der Torblattbewegung mit der Führungsbahn zusammenwirkende Führungsanordnung aufweist, die vorzugsweise mindestens eine bezüglich einer parallel zu den Gelenkachsen verlaufenden Rollenachse drehbar gelagerte Führungsrolle umfasst, die vorzugsweise zumindest in der Öffnungsstellung des Torblatts in einer Führungsbahn aufgenommen ist.

25. Rolltor nach einem der vorhergehenden Ansprüche, **dadurch gekennzeichnet, dass** der bei einer Öffnungsbewegung vorlaufende Rand des Torblatts durch eine drehfest mit einem in der Schließstellung oberen Rand eines Segments aus einem biegsamen Material verbundene vorlaufende Stabilisierungseinrichtung gebildet ist, die drehfest mit einer Führungsanordnung verbunden ist.

26. Rolltor nach einem der vorhergehenden Ansprüche, **dadurch gekennzeichnet, dass** mindestens ein Gelenkglied eine in der Schließstellung in der Begrenzungsfläche, insbesondere die innere Begrenzungsfläche des Torblatts, anlegbare Dichtungsanordnung zugeordnet ist.

27. Rolltor nach einem der vorhergehenden Ansprüche, **gekennzeichnet durch** eine im Verlauf der Öffnungsbewegung an einen bei einer Öffnungsbewegung nachlaufenden Rand des Torblatts koppelbare und im Verlauf der Öffnungsbewegung vorspannbare Vorspanneinrichtung zum Abbremsen der Öffnungsbewegung und zum Bereitstellen einer das Torblatt von der Öffnungsstellung in die Schließstellung drängenden Vorspannkraft.

28. Rolltor nach einem der vorhergehenden Ansprüche mit einer Führungseinrichtung zur Führung der Torblattbewegung zwischen der Öffnungsstellung und der Schließstellung.

29. Rolltor nach Anspruch 27, **dadurch gekennzeichnet, dass** mindestens eine Führungseinrichtung eine torblattseitige Magnetfelderzeugungseinrichtung und eine bezüglich der Wandöffnung feststehende Magnetfelderzeugungseinrichtung aufweist, wobei die Magnetfelderzeugungseinrichtungen zum Erhalt einer berührungsfreien Führung der Torblattbewegung längs mindestens eines Abschnitts der vorgegebenen Bahn im Bereich mindestens eines der einander entgegengesetzten seitlichen Ränder ausgelegt sind.

## Claims

1. Roller door having a door leaf which can be moved between an open position, in which it at least partially uncovers a wall opening and preferably forms a multi-layered roll at least partially above the wall opening, and a closed position, in which it at least partially closes the wall opening, and which has a plurality of door leaf segments arranged one behind the other in the direction of movement of the door leaf, wherein at least one stabilizing device (1200, 2200) extending perpendicularly to the direction of movement of the door leaf is arranged between two door leaf segments, and the mutually facing edge regions of the door leaf segments are held on the stabilizing device (1200, 2200), as a result of which at least one edge region of at least one segment is held floatingly on the stabilizing device (1200, 2200) in such a way that a relative movement of this edge region with respect to the stabilizing device (1200, 2200) is possible at least in the direction of movement of the door leaf, and at least one segment having a floatingly mounted edge region has at least one pane (110a, 110b, 120a, 102b) which is formed at least in sections from a flexible material, such as for instance polycarbonate, **characterized in that** the at least one segment having a floatingly mounted edge region has at least two panes (110a, 110b, 120a, 102b) which are spaced apart from one another in the direction of thickness of the door leaf and run approximately parallel to one another, each of which has at least one edge region which is held on the stabilizing device (1200, 2200) and faces an adjacent segment, wherein at least one edge region of at least one pane (110a, 110b, 120a, 102b) is held floatingly on the stabilizing device (1200, 2200) in such a way that a relative movement of this edge region with respect to the stabilizing device (1200, 2200) is possible at least in the direction of movement of the door leaf.

2. Roller door according to Claim 1, **characterized by** a limiting arrangement which limits the relative movement of the floatingly held edge region with respect to the stabilizing device (1200, 2200).

3. Roller door according to Claim 2, **characterized in that** the limiting arrangement has an enlargement of the floatingly held edge region in a thickness direction running perpendicularly to the door leaf plane spanned by the direction of movement of the door leaf and the stabilizing device (1200, 2200), and a receptacle (230a, 230b, 2230b), formed in the stabilizing device, for the enlargement of the edge region held floatingly thereon, wherein the receptacle (230a, 230b, 2230b) has an orifice which is penetrated by a transition region of the segment between the enlargement and a region of the segment which is exposed outside the stabilizing device (1200, 2200), the width of which orifice in the thickness direction is greater than the thickness of the transition region in the thickness direction, but smaller than the dimensions of the enlargement in the thickness direction.

4. Roller door according to Claim 3, **characterized in that** the receptacle (230a, 230b, 2230b) is delimited on its side opposite the orifice by a base, wherein the distance between the orifice and the base in the direction of movement of the door leaf is greater than the length of the enlargement of the floatingly held edge region in the direction of movement of the door leaf.

5. Roller door according to Claim 3 or 4, **characterized in that** at least one enlargement is formed by bending the floatingly held edge region with respect to a bending axis running parallel to the stabilizing device (1200, 2200).

6. Roller door according to one of Claims 3 to 5, **characterized in that** at least one enlargement is formed by a thickening of the edge region, in particular by adhesively bonding and/or welding on a keder.

7. Roller door according to one of Claims 3 to 6, **characterized in that** at least one enlargement is formed by an enlargement element, such as for instance an enlargement clamp, held in a form-fitting, force-fitting and/or integrally bonded manner on an edge region of at least one door leaf segment.

8. Roller door according to one of the preceding claims, **characterized in that** the stabilizing device (1200, 2200) has at least two receptacle parts which are connected releasably to one another and which form mutually opposite boundary surfaces of the orifice.

9. Roller door according to one of the preceding claims, **characterized by** joint arrangements, which are arranged in the region of the lateral edges of the door leaf running at least partially in the direction of gravity in the closed position and are fastened to the door leaf, for guiding the movement of the door leaf, each of which joint arrangements has a plurality of joint members which are connected to one another in an articulated manner with respect to joint axes running perpendicularly to the direction of movement or the lateral edges of the door leaf, wherein the door leaf is connected to the joint arrangements via the stabilizing devices (1200, 2200).

10. Roller door according to one of Claims 3 to 9, **characterized by** a sealing material which is accommodated in the receptacle preferably between the enlargement and the orifice.

11. Roller door according to one of Claims 8 to 10, **characterized in that** the stabilizing device has two receptacles which are spaced apart from one another in the direction of movement of the door leaf and of which the upper receptacle in the closed position is delimited by two receptacle parts connected releasably to one another.

12. Roller door according to one of the preceding claims, **characterized in that** at least one stabilizing device (1200, 2200) has two receptacles (230a, 230b, 2230b), which are spaced apart from one another in the direction of thickness of the door leaf, for accommodating in each case one edge region of a pane (110a, 110b, 120a, 102b) of a door leaf segment.

13. Roller door according to one of the preceding claims, **characterized in that** at least one edge region of the inner (outer) pane (110a, 110b, 120a, 102b) which faces (faces away from) the winding axis in the winding is held with greater play with respect to the stabilizing device (1200, 2200) than the corresponding edge region of the outer (inner) pane (110a, 110b, 120a, 102b) of the door leaf segment which faces (faces away from) the winding axis in the winding.

14. Roller door according to one of the preceding claims, **characterized by** a filling material (190), preferably composed of flexible material, arranged on at least one of the edges, running parallel to the direction of movement of the door leaf, of at least one door leaf segment, preferably between mutually facing boundary surfaces of the panes (110a, 110b, 120a, 102b).

15. Roller door according to Claim 14, **characterized in that** the filling material (190) extends over 50% or less, in particular 20% or less, of the door leaf width in a direction running parallel to the stabilizing device (1200, 2200).

16. Roller door according to one of the preceding claims, **characterized in that** at least one stabilizing device (1200, 2200) has two stabilizing elements (3210, 3220) which are spaced apart from one another in the direction of thickness of the door leaf and are connected to one another via a connecting element (3230) composed of thermally insulating material.

17. Roller door according to one of the preceding claims, **characterized in that** at least one segment composed of flexible material is arranged between two stabilizing devices, wherein a lateral edge, running perpendicularly to the stabilizing devices and approximately parallel to the joint arrangements, of the segment extends over two, three or more joint members, and at least one edge region of the segment is held floatingly on a stabilizing device.

18. Roller door according to one of Claims 9 to 17, **characterized in that** at least one stabilizing device extends approximately parallel to a joint axis and is connected along this joint axis to at least one, preferably to two, joint arrangements provided on mutually opposite lateral door leaf edges.

19. Roller door according to one of Claims 9 to 18, **characterized in that** a stabilizing device extending parallel to a joint axis is connected only to the joint arrangements.

20. Roller door according to Claim 19, **characterized in that** the stabilizing device connected only to the joint arrangements has, on its side facing away from the segment, a sealing arrangement which can be placed against a lintel of the wall opening.

21. Roller door according to Claim 19 or 20, **characterized in that** the stabilizing device connected only to the joint arrangements has, on its side facing the segment, at least one sealing strip which extends approximately parallel to the joint axes, preferably over substantially the entire door width, and can be placed against the segment.

22. Roller door according to one of the preceding claims, **characterized by** at least one reinforcing strip which extends parallel to the lateral door leaf edge and is fastened to the door leaf.

23. Roller door according to one of the preceding claims, **characterized by** at least one optionally oval-spiral guide track for guiding the movement of the door leaf and for determining the open position of the door leaf.

24. Roller door according to Claim 23, **characterized in that** at least one joint member has, on its side facing away from the door leaf, a guide arrangement which interacts with the guide track for guiding the movement of the door leaf and which preferably comprises at least one guide roller which is mounted rotatably with respect to a roller axis running parallel to the joint axes and which is accommodated in a guide track preferably at least in the open position of the door leaf.

25. Roller door according to one of the preceding claims, **characterized in that** the leading edge of the door leaf during an opening movement is formed by a leading stabilizing device which is connected rotationally fixedly to an upper edge, in the closed position, of a segment composed of a flexible material and which is connected rotationally fixedly to a guide arrangement.

26. Roller door according to one of the preceding claims, **characterized in that** at least one joint member is assigned a sealing arrangement which can be placed in the boundary surface, in particular the inner boundary surface of the door leaf, in the closed position.

27. Roller door according to one of the preceding claims, **characterized by** a pretensioning device which can be coupled in the course of the opening movement to a trailing edge of the door leaf during an opening movement and can be pretensioned in the course of the opening movement, for braking the opening movement and for providing a pretensioning force which urges the door leaf from the open position into the closed position.

28. Roller door according to one of the preceding claims, having a guide device for guiding the movement of the door leaf between the open position and the closed position.

29. Roller door according to Claim 27, **characterized in that** at least one guide device has a magnetic field generating device on the door leaf side and a magnetic field generating device which is fixed with respect to the wall opening, the magnetic field generating devices being designed to obtain contact-free guidance of the movement of the door leaf along at least one section of the predefined track in the region of at least one of the mutually opposite lateral edges.

## Revendications

1. Porte roulante avec un vantail de porte déplaçable entre une position d'ouverture, à laquelle il libère au moins partiellement une ouverture murale et forme de préférence une bobine multicouche au moins partiellement au-dessus de l'ouverture murale, et une position de fermeture, à laquelle il ferme au moins partiellement l'ouverture murale, qui présente une pluralité de segments de vantail de porte disposés les uns derrière les autres dans la direction de déplacement du vantail de porte, dans laquelle au moins un dispositif de stabilisation (1200, 2200) s'étendant perpendiculairement à la direction de déplacement du vantail de porte est disposé entre deux segments de vantail de porte et les zones de bord des segments de vantail de porte orientées l'une vers l'autre sont maintenues au dispositif de stabilisation (1200, 2200), moyennant quoi au moins une zone de bord d'au moins un segment est maintenue flottante au dispositif de stabilisation (1200, 2200) de telle manière qu'un déplacement relatif de cette zone de bord par rapport au dispositif de stabilisation (1200, 2200) soit possible au moins dans la direction de déplacement du vantail de porte et au moins un segment présentant une zone de bord montée flottante présente au moins une plaque (110a, 110b, 120a, 102b) qui est formée au moins en partie à partir d'un matériau flexible, tel qu'en polycarbonate par exemple, **caractérisée en ce que** le segment présentant au moins une zone de bord montée flottante présente au moins deux plaques (110a, 110b, 120a, 102b) espacées l'une de l'autre dans la direction d'épaisseur du vantail de porte et s'étendant approximativement parallèlement l'une à l'autre, dont chacune présente au moins une zone de bord maintenue au dispositif de stabilisation (1200, 2200) et orientée vers un segment adjacent, dans laquelle au moins une zone de bord d'au moins une plaque (110a, 110b, 120a, 102b) est maintenue flottante au dispositif de stabilisation (1200, 2200) de telle manière qu'un déplacement relatif de cette zone de bord par rapport au dispositif de stabilisation (1200, 2200) soit possible au moins dans la direction de déplacement du vantail de porte.

2. Porte roulante selon la revendication 1, **caractérisée par** un agencement de limitation limitant le déplacement relatif de la zone de bord maintenue flottante par rapport au dispositif de stabilisation (1200, 2200).

3. Porte roulante selon la revendication 2, **caractérisée en ce que** l'agencement de limitation présente un élargissement de la zone de bord maintenue flottante dans une direction d'épaisseur s'étendant perpendiculairement au plan du vantail de porte défini par la direction de déplacement du vantail de porte et le dispositif de stabilisation (1200, 2200) et un logement (230a, 230b, 2230b) formé dans le dispositif de stabilisation pour l'élargissement de la zone de bord maintenue flottante sur celui-ci, dans laquelle le logement (230a, 230b, 2230b) présente une embouchure traversée par une zone de transition du segment entre l'élargissement et une zone du segment exposée à l'extérieur du dispositif de stabilisation (1200, 2200), dont la largeur dans la direction d'épaisseur est supérieure à l'épaisseur de la zone de transition dans la direction d'épaisseur, mais inférieure aux dimensions de l'élargissement dans la direction d'épaisseur.

4. Porte roulante selon la revendication 3, **caractérisée en ce que** le logement (230a, 230b, 2230b) est limité sur son côté opposé à l'embouchure par un fond, dans laquelle la distance entre l'embouchure et le fond dans la direction de déplacement du vantail de porte est supérieure à la longueur de l'élargissement de la zone de bord maintenue flottante dans la direction de déplacement du vantail de porte.

5. Porte roulante selon la revendication 3 ou 4, **caractérisée en ce qu'**au moins un élargissement est formé par pliage de la zone de bord maintenue flottante par rapport à un axe de pliage s'étendant parallèlement au dispositif de stabilisation (1200, 2200).

6. Porte roulante selon l'une quelconque des revendications 3 à 5, **caractérisée en ce qu'**au moins un élargissement est formé par un épaississement de la zone de bord, en particulier par collage et/ou soudage d'un bourrelet.

7. Porte roulante selon l'une quelconque des revendications 3 à 6, **caractérisée en ce qu'**au moins un élargissement est formé par un élément d'élargissement, tel qu'une pince d'élargissement, maintenu par complémentarité de forme, de force et/ou de matériau au niveau d'une zone de bord d'au moins un segment de vantail de porte.

8. Porte roulante selon l'une quelconque des revendications précédentes, **caractérisée en ce que** le dispositif de stabilisation (1200, 2200) présente au moins deux éléments de réception reliés l'un à l'autre de manière amovible, lesquels forment des surfaces de délimitation de l'embouchure opposées l'une à l'autre.

9. Porte roulante selon l'une quelconque des revendications précédentes, **caractérisée par** des agencements d'articulation disposés dans la zone des bords latéraux du vantail de porte et fixés au vantail de porte, lesdits bords s'étendant au moins par sections dans la direction de gravité en position de fermeture, pour guider le déplacement du vantail de porte, dont chacun présente une pluralité d'éléments d'articulation reliés les uns aux autres de manière articulée par rapport à des axes d'articulation s'étendant perpendiculairement à la direction de déplacement ou aux bords latéraux du vantail de porte, dans laquelle le vantail de porte est relié aux agencements d'articulation par le biais des dispositifs de stabilisation (1200, 2200).

10. Porte roulante selon l'une quelconque des revendications 3 à 9, **caractérisée par** un matériau d'étanchéité introduit dans le logement de préférence entre l'élargissement et l'embouchure.

11. Porte roulante selon l'une quelconque des revendications 8 à 10, **caractérisée en ce que** le dispositif de stabilisation présente deux logements espacés l'un de l'autre dans la direction de déplacement du vantail de porte, dont le logement supérieur en position de fermeture est limité par deux éléments de réception reliés l'un à l'autre de manière amovible.

12. Porte roulante selon l'une quelconque des revendications précédentes, **caractérisée en ce qu'**au moins un dispositif de stabilisation (1200, 2200) présente deux logements (230a, 230b, 2230b) espacés l'un de l'autre dans la direction d'épaisseur du vantail de porte pour recevoir respectivement une zone de bord d'une plaque (110a, 110b, 120a, 102b) d'un segment de vantail de porte.

13. Porte roulante selon l'une quelconque des revendications précédentes, **caractérisée en ce qu'**au moins une zone de bord de la plaque intérieure (extérieure) (110a, 110b, 120a, 102b) orientée vers (opposée à) l'axe d'enroulement dans la bobine est maintenue avec un plus grand jeu par rapport au dispositif de stabilisation (1200, 2200) que la zone de bord correspondante de la plaque extérieure (intérieure) (110a, 110b, 120a, 102b) du segment de vantail de porte opposée à (orientée vers) l'axe d'enroulement dans la bobine.

14. Porte roulante selon l'une quelconque des revendications précédentes, **caractérisée par** un matériau de remplissage (190), de préférence en matériau souple, disposé sur au moins un des bords, s'étendant parallèlement à la direction de déplacement du vantail de porte, d'au moins un segment de vantail de porte, de préférence entre des surfaces de délimitation des plaques (110a, 110b, 120a, 102b) orientées l'une vers l'autre.

15. Porte roulante selon la revendication 14, **caractérisée en ce que** le matériau de remplissage (190) s'étend sur 50 % ou moins, en particulier 20 % ou moins de la largeur du vantail de porte dans une direction s'étendant parallèlement au dispositif de stabilisation (1200, 2200).

16. Porte roulante selon l'une quelconque des revendications précédentes, **caractérisée en ce qu'**au moins un dispositif de stabilisation (1200, 2200) présente deux éléments de stabilisation (3210, 3220) espacés l'un de l'autre dans la direction d'épaisseur du vantail de porte, lesquels sont reliés l'un à l'autre par le biais d'un élément de liaison (3230) en matériau thermiquement isolant.

17. Porte roulante selon l'une quelconque des revendications précédentes, **caractérisée en ce qu'**au moins un segment en matériau flexible est disposé entre deux dispositifs de stabilisation, dans laquelle un bord latéral du segment s'étendant perpendiculairement aux dispositifs de stabilisation et approximativement parallèlement aux agencements d'articulation s'étend sur deux, trois éléments d'articulation ou plus et au moins une zone de bord du segment est maintenue flottante à un dispositif de stabilisation.

18. Porte roulante selon l'une quelconque des revendications 9 à 17, **caractérisée en ce qu'**au moins un dispositif de stabilisation s'étend approximativement parallèlement à un axe d'articulation et est relié le long de cet axe d'articulation à au moins un agencement d'articulation, paré de préférence de deux bords de vantail de porte latéraux opposés l'un à l'autre.

19. Porte roulante selon l'une quelconque des revendications 9 à 18, **caractérisée en ce qu'**un dispositif de stabilisation s'étendant parallèlement à un axe d'articulation n'est relié qu'aux agencements d'articulation.

20. Porte roulante selon la revendication 19, **caractérisée en ce que** le dispositif de stabilisation relié uniquement aux agencements d'articulation présente, sur son côté opposé au segment, un agencement d'étanchéité pouvant être disposé contre un linteau de l'ouverture murale.

21. Porte roulante selon la revendication 19 ou 20, **caractérisée en ce que** le dispositif de stabilisation relié uniquement aux agencements d'articulation présente, sur son côté orienté vers le segment, au moins une bande d'étanchéité s'étendant approximativement parallèlement aux axes d'articulation, de préférence sur sensiblement toute la largeur de la porte, et pouvant être disposée contre le segment.

22. Porte roulante selon l'une quelconque des revendications précédentes, **caractérisée par** au moins une bande de renforcement s'étendant parallèlement au bord latéral de vantail de porte et fixée au vantail de porte.

23. Porte roulante selon l'une quelconque des revendications précédentes, **caractérisée par** au moins une voie de guidage éventuellement en forme de spirale ovale pour guider le déplacement du vantail de porte et pour déterminer la position d'ouverture du vantail de porte.

24. Porte roulante selon la revendication 23, **caractérisée en ce qu'**au moins un élément d'articulation présente sur son côté opposé au vantail de porte un agencement de guidage coopérant avec la voie de guidage pour guider le déplacement du vantail de porte, qui comprend de préférence au moins un galet de guidage monté à rotation par rapport à un axe de galet s'étendant parallèlement aux axes d'articulation, qui, de préférence, est reçu par une voie de guidage tout du moins en position d'ouverture du vantail de porte.

25. Porte roulante selon l'une quelconque des revendications précédentes, **caractérisée en ce que** le bord avant du vantail de porte lors d'un mouvement d'ouverture est formé par un dispositif de stabilisation avant relié de manière bloqué en rotation à un bord supérieur, en position de fermeture, d'un segment en matériau flexible, qui est relié de manière bloqué en rotation à un agencement de guidage.

26. Porte roulante selon l'une quelconque des revendications précédentes, **caractérisée en ce qu'**au moins un élément d'articulation est associé à un agencement d'étanchéité pouvant être disposé dans la surface de délimitation, en particulier la surface de délimitation intérieure, du vantail de porte, en position de fermeture.

27. Porte roulante selon l'une quelconque des revendications précédentes, **caractérisée par** un dispositif de précontrainte pouvant être accouplé au cours du mouvement d'ouverture à un bord arrière du vantail de porte lors d'un mouvement d'ouverture et pouvant être précontraint au cours du mouvement d'ouverture pour freiner le mouvement d'ouverture et pour fournir une force de précontrainte poussant le vantail de porte de la position d'ouverture à la position de fermeture.

28. Porte roulante selon l'une quelconque des revendications précédentes, avec un dispositif de guidage pour guider le déplacement du vantail de porte entre la position d'ouverture et la position de fermeture.

29. Porte roulante selon la revendication 27, **caractérisée en ce qu'**au moins un dispositif de guidage présente un dispositif de génération de champ magnétique côté vantail de porte et un dispositif de génération de champ magnétique fixe par rapport à l'ouverture murale, dans laquelle les dispositifs de génération de champ magnétique sont conçus pour obtenir un guidage sans contact du déplacement du vantail de porte le long d'au moins une section de la trajectoire prédéfinie dans la zone d'au moins un des bords latéraux opposés l'un à l'autre.
